# EUROPEAN PATENT APPLICATION

(11) **EP 4 606 602 A1**
(43) Date of publication of application: **27.08.2025**
(21) Application number: 25157264.0
(22) Date of filing: 11.02.2025
(51) Int. Cl.: B60C 13/00, B29D 30/06, B29D 30/72

(54) **PNEUMATIC TIRE AND PNEUMATIC TIRE MOLD**

(30) Priority: 21.02.2024 JP 2024024645
(71) Applicant: TOYO TIRE CORPORATION, Itami-shi, Hyogo 6640847 (JP)
(72) Inventor: KAMADA, Nobuyuki, Itami-shi, Hyogo, 6640847 (JP); KURIYAMA, Hikaru, Itami-shi, Hyogo, 6640847 (JP)
(74) Representative: von Hirschhausen, Helge

(57) **Abstract**

A tire (1) includes a plurality of protrusions (31) formed on a tire side face (13) that is an outward face in a tire axial direction located further inward in a tire radial direction than a ground contact end of a tread and further outward in the tire radial direction than a rim line. Each protrusion (31) has a polygonal shape having a first face (33) rising from the tire side face (13) at an angle within ±15% with respect to a plane rising at 90° with respect to the tire side face (13), and a second face (34) connected to the first face (33) at the top and rising to be inclined with respect to the tire side face (13) at an angle of greater than 90°+15%.

## Description

### CROSS REFERENCE TO RELATED APPLICATION

This application claims priority to Japanese Patent Application No. 2024-024645 filed on February 21, 2024, which is incorporated herein by reference in its entirety including the specification, claims, drawings, and abstract.

### TECHNICAL FIELD

The present invention relates to a pneumatic tire and a pneumatic tire mold, and more particularly to a pneumatic tire having a plurality of protrusions on a tire side face that is an outer face in the tire axial direction located further outward than a rim line in the tire radial direction.

In recent years, a tire design having a plurality of protrusions on a tire side face to improve design quality of the tire has been proposed. JP 2013-169827 A, for example, discloses a tire having a plurality of projecting portions protruding outward of the tire and regularly arranged on a top face of a tire side portion. The projecting portions have the maximum width and the maximum height that fall within a predetermined range, and the interval of the projecting portions arranged on the tire top face is more than 0.1 µm and less than 100 µm. JP 2013-169827 A discloses that this configuration enables formation of an optimal air relaxation layer on the tire top face.

### SUMMARY

A tire design merely having a plurality of projecting portions arranged regularly on a tire side face as described above, however, is not sufficient in terms of improvement for design quality. Specifically, in order to improve the design quality of a tire side face, the tire side face may have luster based on high contrast. However, the configuration disclosed in JP 2013-169827 A takes no consideration of such luster and there is room for improvement in terms of achievement of a tire with high design quality.

The present invention is therefore aimed at providing a pneumatic tire including a side face with luster based on high contrast and thereby having high design quality, and at a mold for such a pneumatic tire.

In accordance with one aspect of the present invention, a pneumatic tire includes a plurality of protrusions on a tire side face that is an outward face in a tire axial direction located further inward in a tire radial direction than a ground contact end of a tread and further outward in the tire radial direction than a rim line. Each of the protrusions has a polygonal shape having at least one first face rising from the tire side face at an angle within ±15% with respect to a plane rising at 90° with respect to the tire side face, and at least one second face connected to the first face at a top portion of the first face and rising to be inclined with respect to the tire side face at an angle of greater than 90°+15%.

In accordance with one aspect of the present invention, a mold for molding the pneumatic tire of the present invention includes a molding face including a plurality of recesses corresponding to the plurality of protrusions.

The pneumatic tire and the pneumatic tire mold according to the present invention enable formation of light reflection faces using the second faces on the tire side face while generating shadow portions such as black lines using the first faces, thereby allowing the tire side face to have high contrast. This results in generation of significant luster on the tire side face due to light reflection, to thereby achieve a tire with high design quality.

### BRIEF DESCRIPTION OF DRAWINGS

An embodiment of the present disclosure will be described based on the following figures, wherein:
FIG. 1 illustrates a tire profile shape in a meridian cross section of a pneumatic tire according to an example embodiment, and illustrates a range where a plurality of protrusions are formed;
FIG. 2A illustrates an annular portion including two patterned portions on a tire side face of the pneumatic tire according to the embodiment;
FIG. 2B is an enlarged view of an upper part of the annular portion illustrated in FIG. 2A;
FIG. 3 is an enlarged view illustrating a circumferential portion of the tire side face including section A in FIG. 2B, with contrast of a reflection face and a shadow portion being emphasized;
FIG. 4 is an enlarged perspective view corresponding to section B in FIG. 3;
FIG. 5 illustrates a section C in FIG. 4 as viewed from outward in a direction orthogonal to a protrusion forming base face;
FIG. 6 is a perspective view of the patterned portion illustrated in FIG. 4 as viewed closely to the tire side face and at a tire circumferentially distant location;
FIG. 7 is an enlarged perspective view of a portion of the pattern region illustrated in FIG. 5 when viewed from outward in the tire radial direction;
FIG. 8 is a cross sectional view in FIG. 5;
FIG. 9 is an enlarged view of section E in FIG. 8;
FIG. 10 illustrates a shape of an extracted portion of the pattern region on the tire side face according to the embodiment, when viewed from outward in a direction orthogonal to the protrusion forming base face;
FIG. 11 is a schematic diagram showing that, in the embodiment, after an airflow hits a protrusion, the airflow further hits another downstream protrusion due to turbulent flow, making it likely to shift a release point toward the downstream side;
FIG. 12 is a schematic diagram of a configuration according to another example embodiment with a protrusion pitch ratio of less than 2, showing that no turbulent flow occurs on the surface of a protrusion, as on a flat face;
FIG. 13 is a schematic diagram of a configuration according to another example embodiment with a protrusion pitch ratio of less than 2, showing, with a columnar element Sa, that a wake flow region is generated by a released air flow on the air-flow downstream side of the tire side face;
FIG. 14 is a schematic diagram showing, with a columnar element S in a simulated manner, that, in an embodiment, a wake flow region generated by a released air flow has a decreased width on the air-flow downstream side of the tire side face, increasing the effect of reducing negative pressure;
FIG. 15 is a cross sectional view illustrating a pneumatic tire mold according to an embodiment;
FIG. 16 is a perspective view illustrating a portion of a region where recesses corresponding to the protrusions of the pneumatic tire mold are formed according to an embodiment; and
FIG. 17 is a cross sectional view of a pneumatic tire according to another example embodiment, illustrating a plurality of protrusions protruding from different surfaces of the tire side face; and
FIG. 18 is a diagram corresponding to FIG. 2B, illustrating a pneumatic tire according to another example embodiment.

### DESCRIPTION OF EMBODIMENTS

A pneumatic tire and a mold for the pneumatic tire, which will be also referred to a "pneumatic tire mold", according to an embodiment of the present invention will be described in detail below by reference to the drawings. The embodiment described below is only an example, and the present invention is not limited to the example. Further, selective combinations of elements in the embodiments and the modification examples described below fall within the range of the present invention.

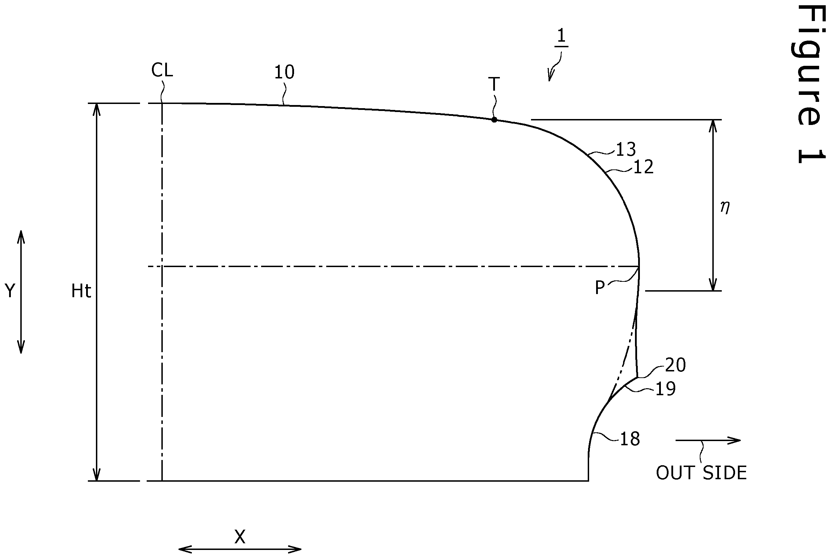

FIG. 1 is a meridian cross sectional view of a pneumatic tire 1 according to one example embodiment, illustrating a profile shape of the tire and indicating a range where a plurality of protrusions are formed. As illustrated in FIG. 1, the pneumatic tire 1 includes a tread 10 that is a portion that comes into contact with road surfaces. In the following description, the "pneumatic tire 1" will be simply referred to as the "tire 1". The tread 10 has a tread pattern including a plurality of blocks, and is annularly disposed along the tire circumferential direction. While in the illustrated example the tread 10 is composed of a single block, the tread 10 actually includes a plurality of blocks separated from each other in the tire axial direction X. Specifically, the blocks are separated from each other by circumferential grooves extending circumferentially. The tread 10 has a ground contact ends T. In FIG. 1, the tire axial direction is indicated by X, and the tire radial direction is indicated by Y.

In the following, the configuration of the tire 1 is described regarding a vehicle outward portion of the tire 1 (OUT) with respect to the center CL in the tire axial direction X. The shape of the vehicle outward portion of the tire 1 and the shape of the vehicle inward portion of the tire 1 are symmetrical, except for a pattern region of the tire side face, including a recess where protrusions are disposed, which will be described below.

The tire 1 includes a side wall 12 disposed at an end portion further outward with respect to the tread 10 in the tire axial direction X and protruding most outwardly, and a bead (not shown) fixed to a rim of the wheel. The side wall 12 and the bead are annularly disposed along the tire circumferential direction. The side wall 12 extends inward in the tire radial direction Y from each of opposite ends of the tread 10 in the tire axial direction X. A rim stop 18 that forms an outer surface of the bead is disposed adjacent to the side wall 12 in a radially Y inward end portion of the tire 1.

The tire 1 is a pneumatic tire inflated at a predetermined pressure level. The tread 10 is composed of a tread rubber. The side wall 12 is composed of a side wall rubber that differs from the tread rubber.

In the present specification, the dimension of each part of the tire refers to the dimension of each part of an unused tire mounted on a regular rim, measured in an unloaded regular state of the tire inflated to a regular internal pressure, unless otherwise specified.

"ground contact end T" refers to each of opposite ends, in the tire axial direction X, of a region contacting a flat road surface when a load which is 88% of a regular load at a regular internal pressure is applied in a state in which the tire 1 which is yet to be used is fitted on a regular rim, and filled with air to achieve the regular internal pressure.

The "regular rim" as used herein refers to a rim defined according to the tire standard, and is a "standard rim" according to the Japanese Automobile Tire Manufacturing Association (JATMA), a "Design Rim" according to the Tire and Rim Association (TRA), and a "Measuring Rim" according to the European Tire and Rim Technical Organization (ETRTO). The "regular internal pressure" is a "maximum air pressure" according to JATMA, the maximum value in Table "TIRE LOAD LIMITS AT VARIOUS COLD INFLATION PRESSURES" in TRA, and an "INFLATION PRESSURE" according to ETRTO. The "regular load" is a "maximum load rating" according to JATMA, the maximum value described in Table "TIRE LOAD LIMITS AT VARIOUS COLD INFLATION PRESSURES" according to TRA, and a "LOAD CAPACITY" according to ETRTO.

The tire 1 includes a carcass, a belt layer, and an inner liner. The carcass is a rubber-coated cord layer, and constitutes a frame of the tire 1 that is resistant against load, impact, and air pressure, for example. The belt layer is a reinforcing belt disposed between a tread rubber 11 and the carcass. The belt layer compresses the carcass tightly to increase rigidity of the tire 1. The belt layer comprises a plurality of belts laminated in the tire radial direction Y. Each belt includes a plurality of cords arranged in a direction inclined with respect to the tire circumferential direction and covered with rubber. The cords in two adjacent belts are inclined in opposite directions with respect to the tire circumferential direction such that the cords in the two belts intersect with each other. The cord is made of steel, for example.

A belt reinforcing layer extends circumferentially between the belt layer and the tread rubber to cover the entire portion of the belt layer in the tire axial direction X. The belt reinforcing layer comprises a cord extending substantially circumferentially and coated with rubber. The cord is made of an organic fiber, for example.

The tire 1 according to the embodiment is mounted on a vehicle in a specified mounting direction. Specifically, two opposite sides of the tire 1 are respectively specified as an outward side and an inward side of the vehicle when mounted. In FIG. 1, the tire 1 is mounted on the vehicle such that the right side of the tire 1 faces outward (OUT) of the vehicle and the left side of the tire 1 faces inward (IN) of the vehicle.

A tire side typically has symbols called serial, including information such as a size code, a production time (year and week of production), and a production place (factory code), for example. The mounting direction of the tire 1 with respect to the vehicle is specified by disposing the serial only on the tire side facing outward of the vehicle (side wall 12), or disposing different serials on the side facing outward of the vehicle and the side facing inward of the vehicle. In a specific example, both sides of the tire 1 include a production factory code and a size code, whereas only the side facing outward in the vehicle width direction includes production year and week information.

The tire side facing outward of the vehicle may indicate, by letters or symbols, that the side is an outward side in the mounted state.

Further, a rim protector 19 protruding axially outward is disposed as part of rim stop rubber that functions as a rim stop 18 A rim line 20 is disposed annularly along the tire circumferential direction at an apex located at an outer edge of the rim protector 19 in the tire axial direction. The rim protector 19 serves to protect the rim from outer damage. The rim line 20 is a line used to confirm, based on a space between the rim line 20 and the rim, that the tire 1 is mounted on the rim at an appropriate position. While the example in FIG. 1 includes the rim protector 19, the rim protector 19 may be omitted, as indicated by a chain double-dashed line. In this configuration, the rim line that is an annular protrusion protruding outward in the tire axial direction is disposed on the tire side in order to confirm that the tire 1 is mounted on the rim at an appropriate position.

In the present example, the tire 1 includes a patterned portion including a plurality of protrusions on a tire side face 13 that is an outer side face in the tire axial direction X located further outward in the tire radial direction Y than the rim line 20, and further inward in the tire radial direction Y than the ground contact end T of the tread 10.

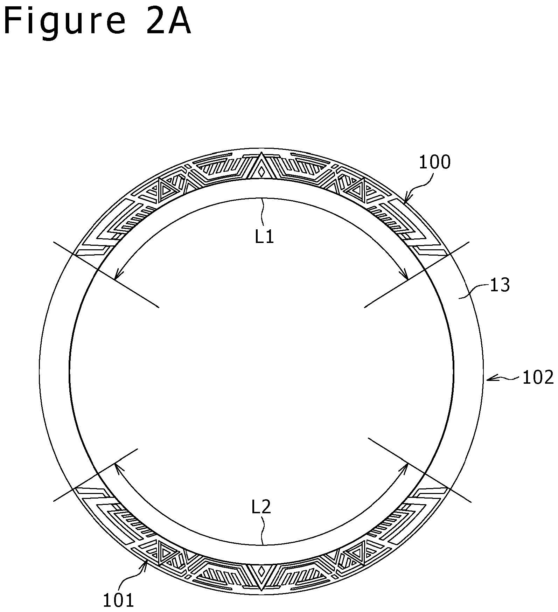

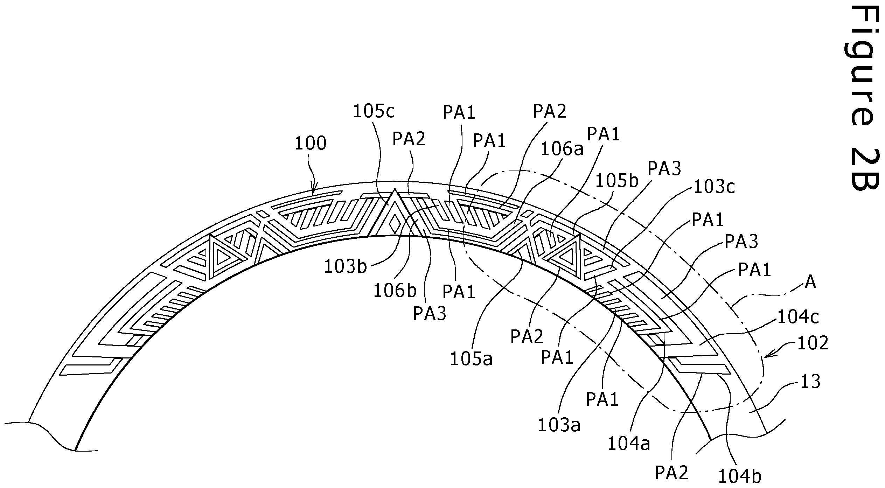

FIG. 2A illustrates an annular portion 102 including two patterned portions 100 and 101 on the tire side face 13 of the tire 1. FIG. 2B is an enlarged view of an upper part in FIG. 2A. As illustrated in FIGs. 2A and 2B, the tire side face 13 facing outward of the vehicle includes the annular portion 102 having a fixed radial length over the entire tire circumferential direction. The annular portion 102 includes the two patterned portions 100 and 101 opposite to each other in the radial direction. The two patterned portions 100 and 101 have an identical shape and are separated from each other in the tire circumferential direction. Each of the two patterned portions 100 and 101 includes a plurality of pattern regions; linear portions 103a, 103b, and 103c, L-shape portions 104a, 104b, and 104c, V-shape portions 105a, 105b, and105c, and bowl-shape portions 106a and 106b. Each pattern region has a line-based shape.

As will be described in detail below, a plurality of protrusions are disposed inside each pattern region. Thus, each of the patterned portions 100 and 101 is a portion where the protrusions are arranged. Each protrusion has a multangular shape having a first face that is forming shadow, and a second face that is connected to the first face at an apex or top and is a smooth face serving as a light reflection face. This configuration allows the tire side face 13 to have a light reflection face and a shadow portion such as a black line, thereby providing high contrast, as will be described below. This configuration thus achieves the tire 1 with high design quality that provides excellent luster generated by light reflection.

Further, in the present example, the ratio of the total circumferential length of the circumferential length L1 of the patterned portion 100 and the circumferential length L2 of the patterned portion 101 (see FIG. 2A) with respect to the entire circumference of the side wall 12 facing outward in the tire axis direction is 50% or greater. This enables the pattern portion having high contrast to be conspicuous in the whole tire 1, resulting in further increase in design quality of the tire 1.

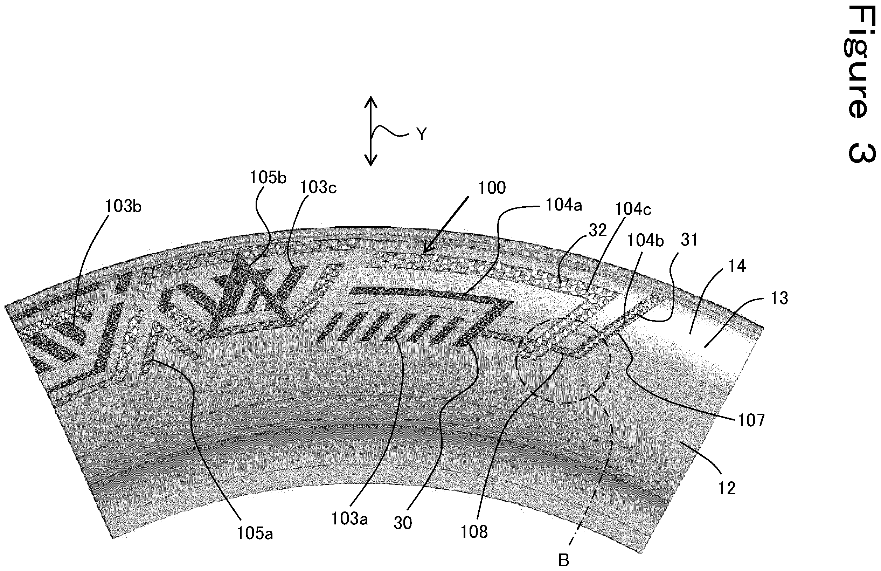

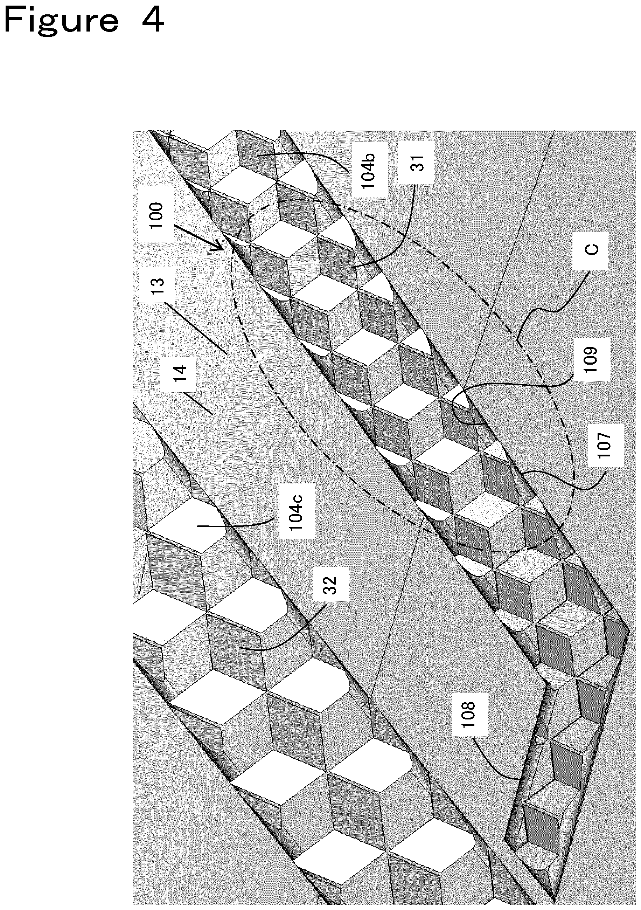

FIG. 3 is an enlarged view illustrating a portion of the tire side face 13 in the circumferential direction including portion A in FIG. 2B, with the contrast between the reflection faces and the shadow portions being emphasized. FIG. 4 is an enlarged perspective view corresponding to portion B in FIG. 3.

As illustrated in FIGs. 2A and 2B, each patterned portion 100, 101 is symmetrical with respect to the circumferential center of each patterned portion 100, 101. Each patterned portion 100, 101 includes a plurality of linear portions 103a, 103b, and 103c having different widths and a plurality of L-shape portions 104a, 104b, and 104c having different widths. The linear portions 103a, 103b, and 103c are inclined with respect to the tire circumferential direction. Each patterned portion 100, 101 further includes two types or more of V-shape portions 105a, 105b, and 105c having different sizes, and two types of bowl-shape portions 106a and 106b opened outward in the tire radial direction. Each shaped portion includes a plurality of protrusions. The pattern regions of the same type include protrusions having different sizes and different pitches that are intervals between apexes of the protrusion, according to the location, width, or the size of the protrusions.

For example, as illustrated in FIGs. 3 and 4, three types of L-shape portions 104a, 104b, and 104c having different widths include protrusions 30, 31, and 32, respectively, having different sizes and pitches. While the following description is based on the protrusions disposed in the L-shape portions, the description similarly applies to the protrusions disposed in other shaped-portions such as the linear portions. The L-shape portion 104a having the smallest width includes protrusions 30 each having the smallest size among the three types of protrusions, and having the smallest pitch. The L-shape portion 104c having the largest width includes protrusions 32 each having the largest size among the three types of protrusions, and having the largest pitch. The L-shape portion 104b having the medium width includes protrusions 31 each having the medium size among three types of protrusions, and having a pitch between the largest pitch and the smallest pitch.

As illustrated in FIGs. 3 and 4, the plurality of protrusions 31 and 32 are disposed inside the L-shape portions 104b and 104c, respectively. As illustrated in FIGs. 3 and 4, each of the L-shape portions 104b and 104c includes a recess 109 having an inclined portion 107 extending in a linear direction that is inclined with respect to the tire circumferential direction with a circumferential portion 108 extending tire circumferentially and connected to one end of the inclined portion 107, and the plurality of protrusion 31 and 32 disposed inside the recess 109. The recess 109 is dented inward from a side wall base face 14 of the tire and extends along the extending direction of the inclined portion 107 or the circumferential portion 108, maintaining substantially the same width.

The side wall base face 14 refers to a surface of the side wall 5 facing outward in the tire axial direction, in a portion of the tire side face 13 where no partial irregularities including protrusions such as side blocks and the recesses 109 are formed.

The protrusions 31 and 32 protrude from the bottom face 110 of the recess 109. The bottom face 110 of the recess 109 corresponds to a protrusion forming base face, which is part of the tire side face 13.

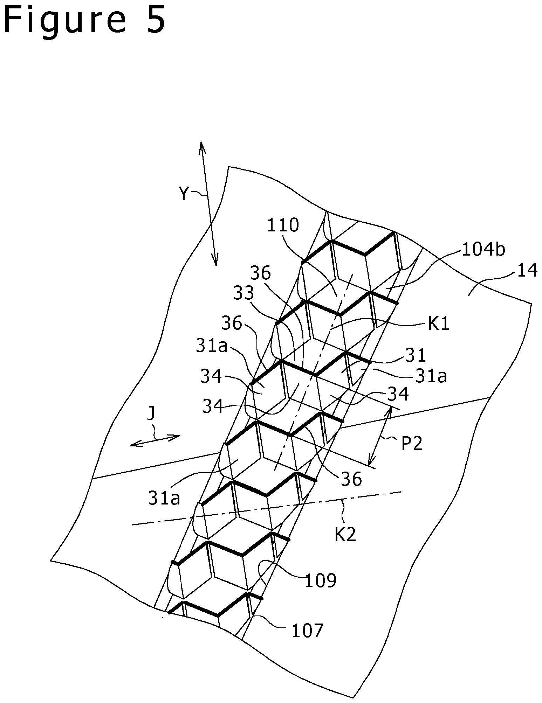

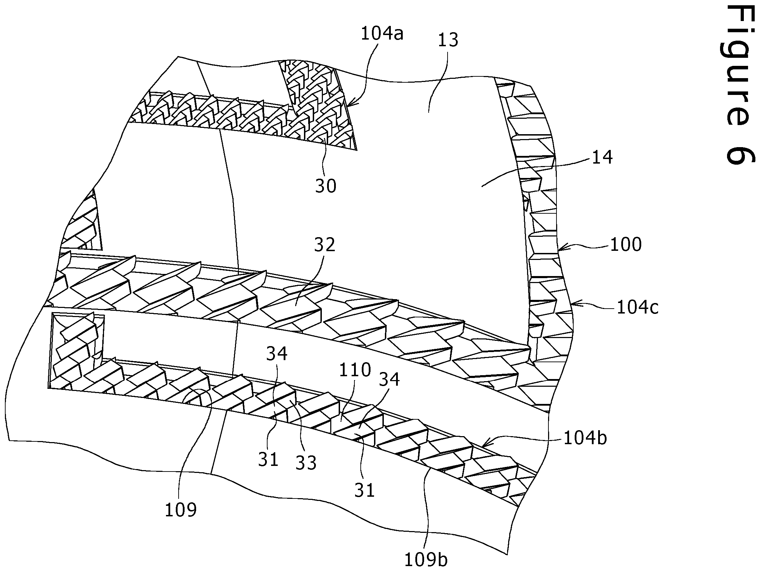

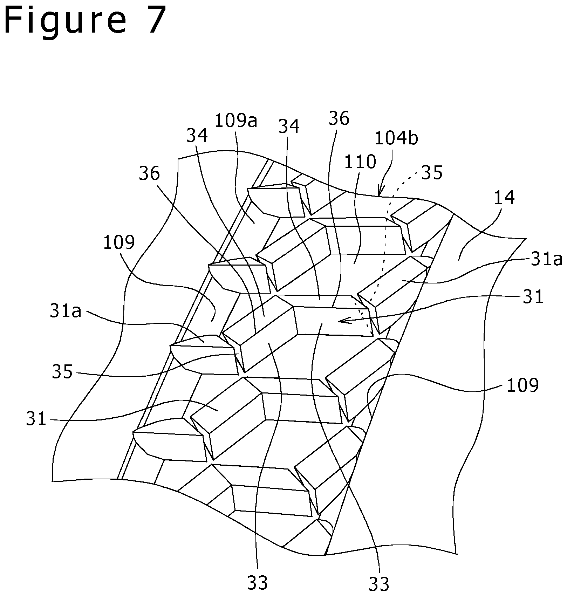

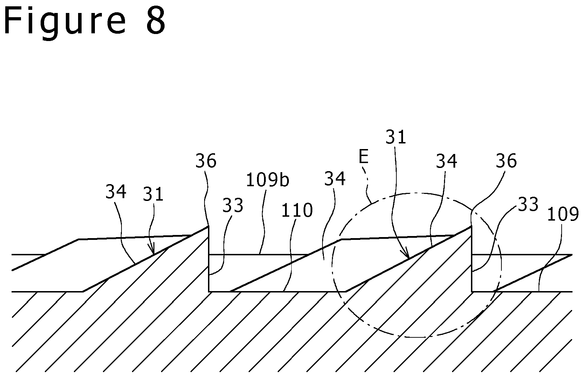

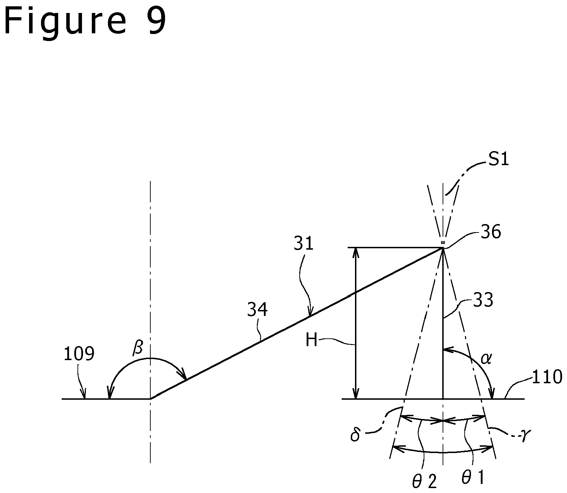

In the following, the protrusions 31 disposed on the L-shape portion 104b having the medium width will be described as representative protrusions, by reference to FIG. 5 to FIG. 9. FIG. 5 illustrates a portion C in FIG. 4 viewed from outward in a direction orthogonal to the bottom face 110 of the recess 109 that is the protrusion forming base face. FIG. 6 is a perspective view of the patterned portion 100 illustrated in FIG. 4 when viewed from a location close to the tire side face 13 and tire circumferentially distant from the patterned portion 100. FIG. 7 is an enlarged perspective view of a portion of the L-shape portion 104b that is a pattern region illustrated in FIG. 5, when viewed from outward in the tire radial direction. FIG. 8 is a cross sectional view in FIG. 5. FIG. 9 is an enlarged view of portion E in FIG. 8.

FIG. 5 illustrates the recess 109 and the protrusions 31 inside the recess 109 in the inclined portion 107 of the L-shaped portion 104b. As illustrated in FIG. 5, the protrusions 31 are arranged in a first direction K1 along the extending direction of the inclined portion 107. As illustrated in FIG. 7, each protrusion 31 has a polygonal shape including two first faces 33, two second faces 34, and two third faces 35. Further, protrusions 31a having a partial shape of the protrusions 31 are also disposed on either side of each protrusion 31 in a direction K2 indicated with alternate long and short dashed lines, which is a second direction slightly inclined with respect to an arrow J in FIG. 5 corresponding to the tire circumferential direction. The protrusion 31a has a partial hexagonal shape that is a partial shape of the protrusion 31 and that is cut by a wall face 109a of the recess 109 and connected to the wall face 109a at the cut portion. The shape of the protrusion 31 having six faces will be described in detail below.

As illustrated in FIG. 5, each protrusion 31 has two second faces 34 that are two smooth faces forming a wide V shape when viewed from outward in the direction orthogonal to the bottom face 110 of the recess 109. Further, as illustrated in FIG. 7, each protrusion 31 has a shape having the first face 33 located outward of each second face 34 in the tire radial direction and connected to the second face 34 by a ridge line 36 that is an apex. More specifically, each protrusion 31 has a polygonal shape having two first faces 33 (see FIG. 7) having the same rectangular shape and connected in a V shape, and two second faces 34 connected to the two first faces 33, respectively, at the ridge line 36 and having the same rectangular shape connected in a V shape. Each protrusion 31 further has two third faces 35 having the same triangular shape connected at opposite ends of the protrusion 31 in a longitudinal direction along the V-shape ridge line 36. Each protrusion 31 has a symmetrical shape with regard to the center in the second direction (the K2 direction indicated by alternate long and short dashed lines in FIG. 5). As illustrated in FIG. 5, each of the two second faces 34 of each protrusion 31 has a rhombic shape when the protrusion 30 is viewed in the direction that is orthogonal to the bottom face 110 of the recess 109. The bottom face 110 has a shape that is dented inward of the tire 1 from the side wall base face 14 along the side wall base face 14. The recess 109 has exactly the same depth to the bottom face 110. A portion of the bottom face 110 where the first faces 33 and the second faces 34 rise may have a linear shape in a cross section.

Further, as illustrated in FIGs. 8 and 9, the first face 33 of each protrusion 31 rises from the bottom face 110 at an angle α (FIG. 9) that falls within a range of ±15% with respect to a plane S1 (see FIG. 9) that rises at 90° from the bottom face 110 of the recess 109. The second face 34 of each protrusion 31 is connected with the first face 33 at the ridge line 36, and rises to be inclined with respect to the bottom face 110 at an angle β (see FIG. 9) that is greater than 90° +15%.

While each first face 33 of the protrusion 31 illustrated in FIG. 9 rises from the bottom face 110 at the angle α that is the same as the angle of 90° at which the plane S1 stands with respect to the bottom face 110, the first face 33 may rise from the bottom face 110 at an angle that is greater than 90° or smaller than 90°within the range of 90° ±15%. Further, the second face 34 of the protrusion 31 may rise inclined with respect to the bottom face 110 at an angle of greater than 90° +30%, and more preferably at an angle of greater than 90° +50%.

This configuration enables the second faces 34 to form light reflection faces and the first faces 33 to create shadow portions with black lines, for example, on the tire side face 13, thereby enabling the tire side face 13 to have high contrast. This configuration therefore provides excellent luster on the tire side face 13 by means of light reflection, thereby achieving the tire 1 with high design quality. As will be described below, the bottom face 110 illustrated in FIG. 5 has, at a plurality of locations, square portions that are rhombuses surrounded by four second faces 34. These square portions have intermediate brightness on the tire side face 13 between the second faces 34 and the shadow portions such as black lines.

Each protrusion 31 has a height H (see FIG. 9) of between 0.15 mm and 0.5 mm, for example. As illustrated in FIGs. 6 and 8, for example, a region in the vicinity of the apex of the protrusion 31 may protrude outward from an open end 109b of the recess 109. For example, the region including the apex of the protrusion 31 may protrude from the open end 109b by about 0.1 mm.

Here, an example configuration that is different from the configuration of the present embodiment is considered. Specifically, in this example configuration, the first face 33 of each protrusion 31 rises from the bottom face 110 at an angle above +15% with respect to the plane S1 rising at 90° from the bottom face 110 of the recess 109 (such that the first face 33 forms an angle with the bottom face 110 that is larger than θ1 that is +15% with respect to the plane S1 rising at 90° as indicated by alternate long and short dashed lines γ in FIG. 9, for example). In this configuration, the ratio of an increase in the brightness due to the first faces 33 exceeds 15%, which prevents generation of a clear difference in the brightness on the tire side face 13.

A further example configuration that is also different from the configuration of the present embodiment is considered. In this further configuration, the first face 33 of each protrusion 31 rises from the bottom face 110 at an angle of less than -15% with respect to the plane S1 rising at 90° from the bottom face 110 of the recess 109 (such that the first face 33 forms an angle with the bottom face 110 that is smaller than θ2 that is -15% with respect to the plane S1 rising at 90° as indicated by alternate long and short dashed lines δ in FIG. 9, for example). In this configuration, while a difference in the brightness is increased on the tire side face 13 due to an increase in "under-angle", the rubber may be torn off when the molded tire is pulled out of the mold, resulting in lowering of moldability.

In the present embodiment, the first face 33 of each protrusion 31 rises from the bottom face 110 of the recess 109 at an angle within ±15% with respect to the plane S1 rising at 90° from the bottom face 110 of the recess 109. This configuration prevents above disadvantages to thereby facilitate generation of a difference in brightness on the tire side face 13 and maintain high moldability of the tire 1.

As illustrated in FIG. 5, for example, the ridges 36 of the second faces 34 of two protrusions 31 adjacent to each other in the first direction (the direction K1 indicated by alternate long and short dashed lines in FIG. 5) are arranged in parallel as viewed from outward in the direction orthogonal to the bottom face 110 of the recess 109. Further, regarding the protrusion 31 on a first side (lower side in FIG. 5) in the first direction, and the protrusion 31a adjacent, on a first side (left side in FIG. 5) in the second direction, to the protrusion 31 located on a second side (upper side in FIG. 5) in the first direction, the ridges 36 of the second faces 34 on the second side (right side in FIG. 5) in the second direction are arranged in parallel to each other. In this configuration, two protrusions 31 and 31a adjacent to each other in the second direction face each other with a minute interval of about 0.1 mm, for example, therebetween. This minute interval forms a black line, which makes contrast with the reflection face conspicuous.

When this configuration is viewed from outward in the direction orthogonal to the bottom face 110 of the recess 109, a rhombus is formed in a region on the bottom face 110 surrounded by three protrusions 31 and 31a, and a plurality of rhombuses are arranged at least in the first direction. This configuration enables formation of a regular pattern including the rhombus formed by one of the second faces 34 of the protrusion 31 and the rhombus on the bottom face 110 alternately arranged along the first direction inside at least a portion of the pattern region including the inclined portion. Here, in the at least a portion of the pattern region including the inclined portion, the width of the inclined portion may be increased or the size of each protrusion 31 may be reduced to thereby allow the plurality of protrusions 31 having six faces to be arranged in each of the first and second directions crossing each other.

Some of the pattern regions, such as the L-shape portions 104a, 104b, and 104c, and the bowl-shape portions 106a and 106b, have circumferential portions extending in the tire circumferential direction, and the plurality of protrusions 31 having six faces are disposed along the second direction inclined with respect to the tire circumferential direction in the circumferential portions.

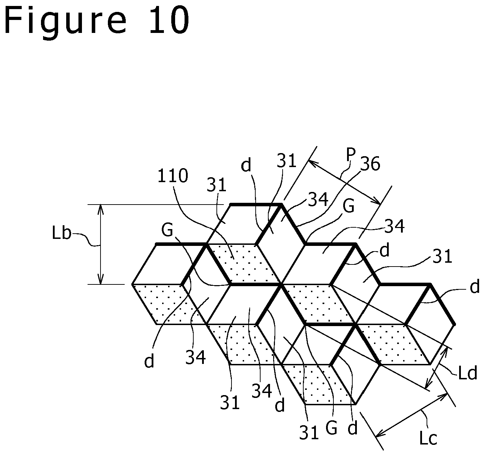

FIG. 10 illustrates an extracted shape of a portion of the pattern region of the tire side face 13 according to the present embodiment, when viewed from outward in the direction orthogonal to the bottom face 110 of the recess. The pattern region is not limited to the L-shape portion 104b. For ease of explanation, it is assumed that the protrusions in FIG. 10 are protrusions 31. In FIG. 10, dotted portions represent the bottom face 110, and a linear portion d indicated in a bold solid line represents an interval between adjacent protrusions 31.

As illustrated in FIG. 10, the minimum interval between intersections G of the ridges 36 of two second faces 34, which are apexes of the protrusions 31, is defined as a pitch P, which is 1.0 mm or more and 5.0 mm or less. In the L-shape portion 104b illustrated in FIGs. 4 and 5, the pitch P2 is an intermediate pitch among pitches of the three L-shape portions, which is 2.0 mm, for example. The pitch P1 in the L-shape portion 104a illustrated in FIGs. 3 and 6 is the smallest pitch among the pitches of the three L-shape portions, which is 1.0 mm, for example. The pitch P3 in the L-shape portion 104c illustrated in FIGs. 4 and 6 is the largest pitch among the pitches of the three L-shape portions, which is 3.0 mm, for example. The L-shape portion 104a, the L-shape portion 104b, and the L-shape portion 104c correspond to a first pattern region, a second pattern region, and a third pattern region, respectively, having different pitches P1, P2, and P3, respectively. The term "pitch" P is used as a general term for different types of pitches.

The bowl-shape portions 106a and 106b illustrated in FIG. 2B, similar to the L-shape portions, are two types of pattern regions having different widths and having a plurality of protrusions with different pitches P. However, a plurality of pattern regions having different pitches may have protrusions with an identical pitch P. For example, the three types of linear portions 103a, 103b, and 103c illustrated in FIG. 2B and FIG. 3 have different widths but have an identical pitch P that corresponds to the pitch P1 of the L-shape portion 104a. In FIG. 2B, the pattern region having the minimum pitch P1 is denoted by PA1, the pattern region having the maximum pitch P3 is denoted by PA3, and the pattern region having an intermediate pitch P2 is denoted by PA2. The different pattern regions having respective protrusions having different pitches P as described above provide different luster caused by different intervals of the second faces that are reflection faces, at a plurality of locations on the tire side face 13 as illustrated in FIG. 3. The larger the pitch P, the larger the area of the second face corresponding to the pitch when the interval of the adjacent protrusions is maintained to 0.1 mm that is minimum, for example, making it easy to allow the second surfaces to illuminate. In contrast, as the pitch P becomes smaller, it becomes more difficult to make the second surface corresponding to the pitch P illuminate. In this manner, different pattern regions have different senses of luster to thereby enable the tire side face 13 to have contrast more easily, thereby further increasing design quality.

Further, when the pitch P is 1 in FIG. 10, the longer-side dimensions Lb and Lc of the rhombus of each second face 34 when viewed from outward in the direction orthogonal to the bottom face 110 of the recess are preferably 0.8 or more and 1.2 or less. Lb and Lc being less than 0.8 significantly reduces the highlight portion. Meanwhile, Lb and Lc exceeding 1.2 significantly increases the highlight portion compared to the bottom face 110 having lower brightness than the second face 34, making it less likely to generate a difference in brightness on the tire side face 13. Here, the dimensions Lb and Lc may be different from each other.

Further, when the pitch P is 1 in FIG. 10, the short-side dimension Ld of the rhombus on the bottom face 110 of the recess 109 when viewed from outward in the direction orthogonal to the bottom face 110 of the recess 109 is preferably 0.5 or more and 0.7 or less. Ld being less than 0.5 significantly reduces the area of the rhombus portion having low brightness. Meanwhile, Ld exceeding 0.7 excessively increases the area of the rhombus portion having low brightness as compared to the highlight portion, which decreases the effect of the highlight portion on the tire side face 13.

Referring back to FIG. 8, a protrusion pitch ratio P/H, which is a ratio of the pitch P between adjacent protrusions 31 of the plurality of protrusions 31 with respect to the height H of the protrusion 31, is 2 or more and 14 or less, more preferably 2 or more and 10 or less, and further preferably 2 or more and 6 or less. This configuration enables the position where the air flow is separated from the tire side face 13 to be shifted rearward in the tire traveling direction, which is further downward. This forms the air flow on the downstream side of the tire 1 to narrow the width of the wake flow region where the rate of the air flow is small, thereby reducing an increase in the air resistance of the tire 1. The protrusion pitch ratio P/H being 2 or more, with the interval between adjacent protrusions 31 being small such as 0.1 mm, for example, enables an increase in the area of the second face 34 while preventing an increase in the height of the protrusion 31, thereby enhancing the light reflection effect. The larger the protrusion pitch ratio P/H, the higher the light reflection effect.

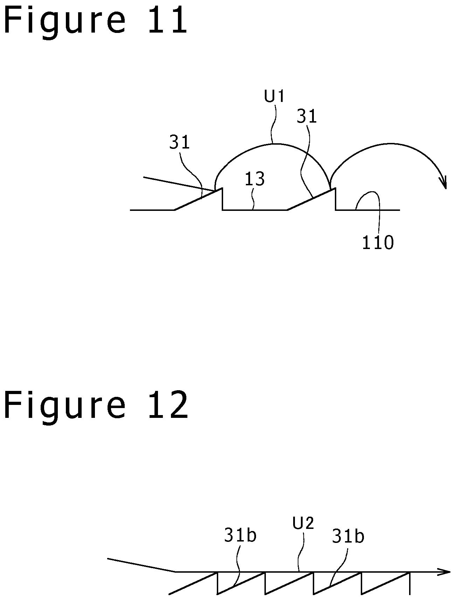

FIG. 11 schematically shows that, in the present embodiment, after the air flow indicated by arrow U1 hits the protrusion 31 on the bottom face 110, the air flow further hits another protrusion 31 on the downstream due to turbulent flow, which makes it likely that the separation point of the air flow will be located on the downstream side. In the embodiment, in which the protrusion pitch ratio P/H is 2 or more and 6 or less, the air flow hitting the protrusion 31 on the bottom face 110 causes turbulent flow flowing downstream, and the turbulent flow further hits another protrusion 31 on the downstream side, which is repeated. This makes it likely that the separation point of the air flow on the tire side face 13 will shift downward. This configuration reduces the width of the wake flow region that has negative pressure and is formed by a portion interposed between flows of air on either side that have been separated from the separation position, on the tire side face 13 on the downstream side of the air flow of the tire, as will be described below. This enables reduction in the pressure resistance caused by formation of the protrusions 31, thereby preventing an increase in the air resistance.

FIG. 12 schematically illustrates a further example configuration having the protrusion pitch ratio P/H of less than 2 and shows that a surface of a protrusion 31b, similar to a flat surface, generates no turbulent flow. When the protrusion pitch ratio P/H is less than 2, the density of the protrusions 31b per unit area on the tire side face 13 is high, as illustrated in FIG. 12. This configuration makes the tire side face 13 similar to the flat surface in relation to the air flow indicated by arrow U,2 and makes the air flow unlikely to generate turbulent flow, further making it unlikely that the separation point of the air flow on the tire side face 13 will shift downward. This results in decrease in the negative pressure lowering effect, reducing the effect of suppression of increase in the air resistance.

Meanwhile, when the protrusion pitch ratio P/H exceeds 14, the number of protrusions 31 that are formed on the tire side face 13 is reduced, which lowers the effect of reducing the negative pressure. This configuration also reduces the effect of suppression of increase in the air resistance. In terms of suppression of increase in the air resistance of the tire 1, the protrusion pitch ratio P/H is more preferably 2 or more and 6 or less.

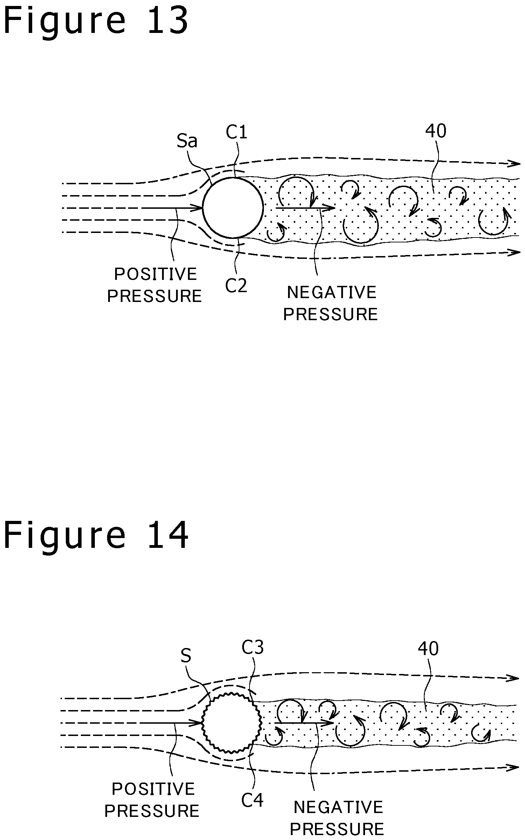

The advantages of the present embodiment will be describe in further detail by reference to FIGs. 13 and 14. FIG. 13 schematically illustrates a further example configuration having the protrusion pitch ratio of less than 2, and shows, with a columnar element Sa, generation of a wake flow region 40 by separated air flow on the downstream side of the air flow with respect to the tire side face 13. In FIG. 13, many turbulent flow are formed within the wake flow region 40. In FIGs. 13 and 14, the tire is shown with a columnar element Sa.

In the further example illustrated in FIG. 13, in which the protrusion pitch ratio is less than 2, the tire side face 13, similar to the flat face, generates no turbulent flows, as described above. In this configuration, it is assumed that, with the rotation of the tire while the vehicle is traveling, an air flow indicated by broken lines hits the top face of the columnar element Sa serving as the tire side face 13. In this case, the positive pressure is generated on the air flow upstream side with respect to the columnar element Sa so as to press the columnar element Sa toward the downstream side. The air flow flowing from upstream of the columnar element Sa toward the downstream side along the top face of the columnar element Sa is separated from the top face of columnar element Sa at locations C1 and C2 in FIG. 13. Then, the wake flow region 40 having a negative pressure is formed by a portion interposed between the separated air flows from the separation locations of the columnar element Sa at either side. In the example illustrated in FIG. 13, the wake flow region 40 has an increased width (vertical length in FIG. 13), which results in a small effect of reducing the negative pressure. Accordingly, when the protrusion pitch ratio is less than 2, the effect of reducing the pressure resistance increase on the tire is small, which further results in reduction in the effect of reducing the air resistance increase.

FIG. 14 schematically shows, with a columnar element S, that, in the embodiment, the width of the wake flow region 40 generated by the separated air flow is decreased to thereby increase the effect of reducing the negative pressure on the downstream side of the air flow with respect to the tire side face 13. FIG. 14 illustrates a plurality of protrusions 31 formed on respective sides of the tire side face 13 in the tire axial direction in a simulated manner by minute protrusions formed on the top face of the columnar element S.

As illustrated in FIG. 14, in the present embodiment, the protrusion pitch ratio is 2 or more and 14 or less, and thus, the separation point of the air flow from the tire side face 13 is likely to be shifted to downstream locations C3 and C4 for the reasons described above with reference to FIG. 11. This configuration results in formation of a portion interposed between the separated air flows on the opposite sides which are separated from the separation locations on the top face of the columnar element S which simulates the tire, on the downstream side of the columnar element S, to thereby reduce the width of the wake flow region 40 at the negative pressure. While FIG. 14 shows that the protrusions 31 are formed on the opposite sides of the tire side face 13 in the tire axial direction in a simulated manner, in the configuration including the protrusions having a first face and a second face only on the vehicle outer side of the tire side face 13, as in the embodiment, the wake flow region 40 similarly has a small width. Thus, in the embodiment, the effect of reducing the increase in the pressure resistance on the tire is increased to thereby reduce the increase in the air resistance.

The protrusions may be formed within the range of 25% or more and 65% or less in the tire radial direction Y (within the range indicated by η in FIG. 1) on the tire side face 13, where the position of the rim line 20 in the tire radial direction is 0 and the tire sectional height Ht is 100.

This configuration enables formation of the protrusions within the range from the outward portion of the tire side face 13 in the tire radial direction Y with respect to a portion near the outer end in the tire axial direction (P in FIG. 1) corresponding to the tire maximum width of the tire side face 13, where the air flow is likely to hit, to the outer circumferential portion of the tire that is conspicuous and has an increased effect of high design quality.

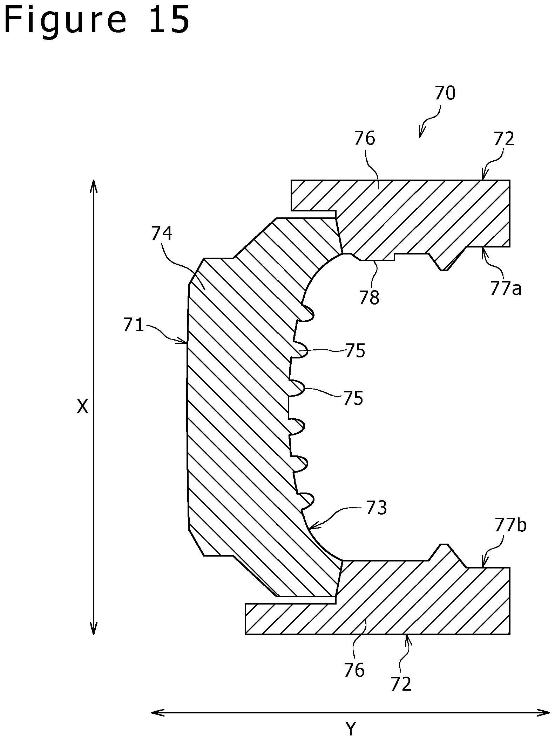

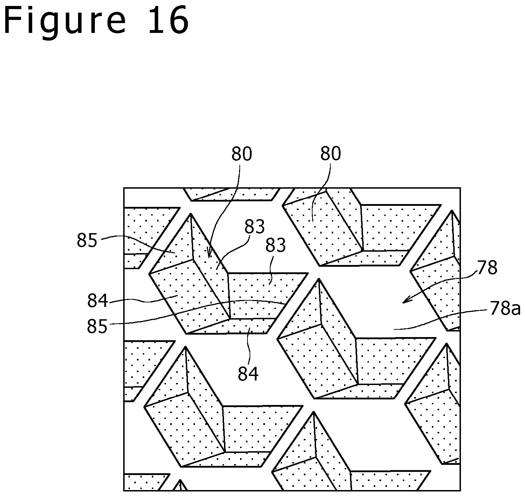

FIG. 15 is a cross sectional view illustrating a tire mold according to an embodiment. FIG.16 is a perspective view illustrating a portion of a region of the tire mold according to the embodiment where recesses 80 corresponding to the plurality of protrusions are disposed. The pneumatic tire according to the present embodiment is formed with a tire mold 70. In the following description, the tire mold 70 will be referred to as a mold 70. The mold 70 is designed to mold the tire 1 illustrated in FIGs. 1 to 10 described above. The mold 70 provides excellent luster on the tire side face 13 by use of light reflection, thereby achieving a tire with high design quality.

Elements of the mold 70 will be described below with respect to the tire axial direction X and the tire radial direction Y of the above-described tire 1 molded by the mold 70.

The mold 70 includes a tread mold 71 configured to mold the top face of the tread of the tire 1, and a pair of side molds 72 configured to mold the side wall faces.

The tread mold 71 has a body 74 with a tread molding face 73, and protrusions 75 protruding from the tread molding face 73.

The body 74 is composed of a metal material, such as an aluminum alloy, for example. For example, AC4 or AC7 aluminum alloy is preferably employed. The protrusions 75 are designed for molding circumferential grooves on the tire 1, and are made of the same metal material as that of the body 74.

The side mold 72 includes a body 76 having a side molding face 77a, 77b. The side molding face 77a designed for forming the tire side face in the outward direction of the vehicle includes a plurality of protruding portions 78 protruding outward from the side molding face 77a. The body 76 is composed of a metal material similar to that of the body 74. The protruding portions 78 are designed for forming, on the tire 1, the recesses 109 where the protrusions rise from the bottom face 110.

The tread mold 71 has a sector shape in a plan view formed by dividing an annular element circumferentially into a plurality of sections. The plurality of divided tread molds 71 constitute a continuous element continuing annularly to have an inner diameter in accordance with an outer diameter of the tire 1 to be molded, in the clamped state as described below. The upper side mold 72 is an annular ring that is secured to a lower face of an upper plate, which is not shown, constituting a vulcanization molding machine and moves upward and downward with ascending and descending of a first elevator (now shown). The lower side mold 72 is an annular ring that is secured to an upper face of a lower plate, which is not shown, constituting the vulcanization molding machine and being secured to the floor. The vulcanization molding machine raises or lowers, with the first elevator, a plurality of segments (not shown) disposed outside the plurality of divided tread molds 71 on one-by-one correspondence. The vulcanization molding machine, simultaneously with the raising and lowering of the first elevator, slidably moves a slope face of an outer circumferential face of each segment vertically along an inclined cylindrical face disposed at the lower end of a second elevator (not shown) that moves upward and downward independent of the first elevator. The vulcanization molding machine thus moves the segments in a reciprocating motion in the radial direction with respect to the center axis of the annularly continuous tread molds 71. The vulcanization molding machine thus switches the mold 70 between a clamping state and a mold opening state.

A green tire is placed on the lower tread mold 71 of the mold 70 configured as described above in the mold opening state, such that the tire axis direction is aligned vertically. An expandable bladder is then disposed on the inner side the green tire, and air is supplied to the bladder to thereby expand the bladder. Then, with the inner face of the green tire held by the outer face of the bladder, the first elevator and the second elevator are raised or lowered to thereby clamp the mold 70. The rubber of the green tire closely adheres to the tread molding face 73 and the side molding faces 77a, 77b due to pressing force from the mold 70, and a heat exchange medium adjusted to a predetermined temperature is allowed to continuously flow through a member to which the upper plate is secured and a member to which the lower plate is secured. This results in vulcanization of the rubber of the green tire, to thereby complete the tire 1 in a predetermined shape.

In the present embodiment, the side molding face 77a designed for forming the tire side face 13 on the outside of the vehicle among the tire side faces 13 both sides of the tire includes the protruding portions 78 to mold the recess 109 where a plurality of protrusions rise. The top of the protruding portion 78 corresponds to the bottom face 110 of the recess 109.

As illustrated in FIG. 16, the top face 78a of the protruding portion 78 includes a plurality of recesses 80 corresponding to a plurality of protrusions to be disposed on the tire side face 13. The recess 80 is indented from the top face 78a into a substantially V shape corresponding to the protrusion having six faces. Specifically, when viewed from the direction orthogonal to the top face 78a, the recess 109 has two rectangular first faces 83 continuous in a V shape, two rectangular second faces 84 connected at the valley to the respective first faces 83 in a valley shape, and two triangular third faces 85 disposed at opposite ends of the recess 80 in the longitudinal direction. The first faces 83, the second faces, 84, and the third faces 85 of the recess 80 form the first faces 33, the second faces 34, and the third faces 35, respectively, of the protrusion of the tire 1.

The recesses 80 of the mold can be formed by applying hole-cutting to the top face 78a of the protruding portions 78 of the mold. Examples of the hole-cutting may include NC machining using a cutting tool such as an end mill, laser machining, or electrical discharge machining.

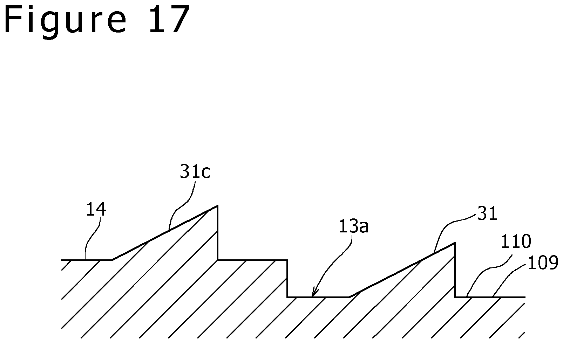

FIG. 17 is a cross sectional view illustrating a plurality of protrusions 31 and 31c protruding from different surfaces of the tire side face 13a on a tire according to another example configuration of the embodiment. This example configuration includes, on the tire side face 13a, a plurality of protrusions 31 protruding from the bottom face 110 of the recess 109 and a plurality of protrusions 31c protruding from the side wall base face 14 located outward of the recess 109. The protrusions 31 and 31c have a shape similar to the shape of the protrusions 31 on the tire 1 illustrated in FIGs. 1 to 10. In this example, light reflection caused by the reflection face of the protrusions 31c on the side wall base face 14 is further conspicuous, which enables the tire side face 13c to have more contrast. In this example, the protrusion 31c on the side wall base face 14 is higher than the protrusion 31 protruding from the bottom face 110 of the recess 109. Therefore, to reduce an increase in the air resistance, it is preferable that the protrusions 31 protrude from the bottom face 110 of the recess 109, as in the configuration illustrated in FIGs. 1 to 10. In the configuration of this example, the tire side face 13 may include only the protrusions 31c on the side wall base face 14 with the protrusions 31 within the recess 109 being omitted. In this example, other features and operation are similar to those of the configurations illustrated in FIGs. 1 to 10, FIG. 15, and FIG. 16.

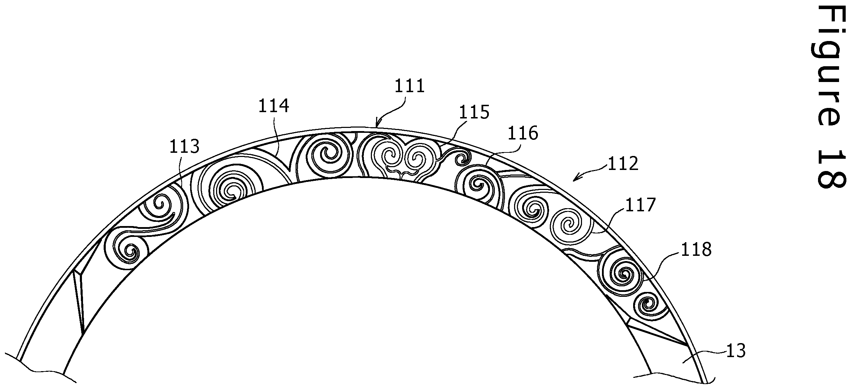

FIG. 18 illustrates a tire according to another example configuration of the embodiment and corresponding to FIG. 2B. In this example, the tire side face 13 includes a circular portion 112 having two patterned portions 111, and FIG. 18 shows only one patterned portion 111 of the two patterned portions 111. The two patterned portions 111 have an identical shape and are circumferentially spaced from each other. Each patterned portion 111 has a plurality of curve-line-based pattern regions 113, 114, 115, 116, 117, and 118 including a plurality of swirl portions. The pattern regions have a plurality of curve line portions having different widths. The curve line portions include a plurality of recesses along the longitudinal direction of the curve lines, and each recess includes a plurality of protrusions rising from the bottom face. Each protrusion formed in the curve line portions has a shape similar to the shape of the protrusion 31 formed on the tire 1 illustrated in FIGs. 1 to 10. The protrusions may be dispersed along the curve lines, rather than being linearly arranged. Further, the protrusions may be arranged in the same orientation along the tire circumferential direction or along the direction inclined with respect to the tire circumferential direction. In this example, other features and operation are similar to those of the configurations illustrated in FIGs. 1 to 10, FIG. 15, and FIG. 16.

Although not shown in the figure, in another example of the embodiment, the tire side face may include two different types or more of protrusions having the same shape and arranged in different orientations along the tire circumferential direction or the direction inclined with respect to the tire circumferential direction. In this configuration, it is possible to achieve different luster on the tire side face at a plurality of locations due to different orientations of the second faces or reflection faces, without changing the size of the protrusions and the pitches of the protrusions, thereby increasing design quality of the tire side face.

While in the above embodiment, only the tire side face 13 facing outward of the vehicle includes protrusions having first faces and second faces, such as the protrusions 31, for example, the tire side faces on opposite sides of the vehicle may include the protrusions to thereby provide a tire configuration having no specific tire mounting direction.

The protrusion-disposed region may be formed over the entire circumferential region of the tire side face or in three or more circumferential locations. Further, the protrusions may be arranged side by side along the tire circumferential direction or along a direction inclined at a predetermined angle with respect to the tire circumferential direction, which facilitates reduction in the air resistance on the tire side face. Meanwhile, the protrusions arranged at random on the tire side face facilitate reduction in the air resistance in accordance with various changes, such as wind flow, in the tire traveling direction, the tire rotational direction, and the swirling-up direction near the ground contact face.

While in the above embodiment the protrusion disposed on the tire side face has a polygonal shape having six faces including two first faces and two second faces, the protrusion may have any polygonal shape having at least one first face and at least one second face. For example, the protrusion may have a polygonal shape having four faces including only one first face rising from the tire side face at an angle in the range of ±15% with respect to a face rising at 90° with respect to the tire side face, only one second face connected to the first face at the apex and rising to be inclined with respect to the tire side face at an angle of greater than90° +15%, and two third faces at opposite ends.

The present disclosure will be further described according to the following embodiments.

Configuration 1: A pneumatic tire, a plurality of protrusions on a tire side face that is an outward face in a tire axial direction located further inward in a tire radial direction than a ground contact end of a tread and further outward in the tire radial direction than a rim line, wherein each of the protrusions has a polygonal shape having a first face rising from the tire side face at an angle within ±15% with respect to a plane rising at 90° with respect to the tire side face, and a second face connected to the first face at a top portion of the first face and rising to be inclined with respect to the tire side face at an angle of greater than 90°±15%.

Configuration 2: The pneumatic tire according to Configuration 1, wherein each of the protrusions has a polygonal shape including two first faces, each of which is the first face, having an identical rectangular shape and connected with each other in a V shape, two second faces, each of which is the second face, connected to the two first faces, respectively, having an identical rectangular shape, and connected with each other in a V shape, and two third faces having an identical triangular shape, the two third faces respectively connected to opposite ends of the protrusion in a longitudinal direction along a V shape ridge line, and each of the two second faces has a rhombus shape when viewed in a direction orthogonal to the tire side face.

Configuration 3: The pneumatic tire according to Configuration 1 or 2, comprising a first pattern region and a second pattern region, wherein a pitch that is an interval between apexes of the protrusions disposed in the first pattern region and a pitch that is an interval between apexes of the protrusions disposed in the second pattern region differ from each other.

Configuration 4: The pneumatic tire according to any one of Configurations 1 to 3, wherein the protrusions having an identical shape and disposed on the tire side face comprise two or more types of protrusions that are disposed in different orientations with respect to a tire circumferential direction or in a direction inclined with respect to the tire circumferential direction.

Configuration 5: The pneumatic tire according to any one of Configurations 1 to 4, wherein the protrusions protrude, on the tire side face, from a bottom face of a recess that is indented inward of the tire from a side wall base face. Configuration 6: The pneumatic tire according to any one of Configurations 1 to 5, wherein adjacent protrusions among the protrusions have a ratio P/H of 2 or more and 14 or less, wherein the P/H is a ratio of a pitch P that is an interval between apexes of the adjacent protrusions with respect to a height H of the protrusions.

Configuration 7: The pneumatic tire according to Configuration 6, wherein the ratio P/H is 2 or more and 10 or less.

Configuration 8: The pneumatic tire according to Configuration 7, wherein the ratio P/H is 2 or more and 6 or less.

Configuration 9: The pneumatic tire according to any one of Configurations 1 to 8, wherein a ratio of a total circumferential length of portions where the protrusions are disposed with respect to an entire circumferential length of a side wall is 50% or more.

Configuration 10: The pneumatic tire according to any one of Configurations 1 to 9, wherein the protrusions are disposed within a range of 25% or more and 65% or less of the tire side face in the tire radial direction where a position of the rim line in the tire radial direction is 0 and a tire sectional height is 100

Configuration 11: A pneumatic tire mold for molding the pneumatic tire according to any one of Configurations 1 to 10, comprising a molding face including a plurality of recesses corresponding to the plurality of protrusions.

### REFERENCE SIGNS LIST

1 pneumatic tire (tire), 10 tread, 12 side wall, 13,13a, 13b tire side face, 14 side wall base face, 18 rim stop, 19 rim protector, 20 rim line, 30, 31, 32, 31a, 31b, 31c protrusion, 33 first face, 34 second face, 35 third face, 36 ridge line, 40 wake flow region, 70 tire mold, 71 tread mold, 72 side mold, 73 tread molding face, 74 body, 75 protrusion, 76 body, 77a,77b side molding face, 78 protruding portion, 78a top face, 80 recess, 100, 101 patterned portion, 102 circular portion, 103a, 103b linear portion, 104a, 104b, 104c L-shape portion, 105a, 105b V-shape portion, 106a, 106b bowl-shape portion, 107 inclination portion, 108 circumferential portion, 109 recess, 109a wall face, 109b opening end, 110 bottom face, 111 patterned portion, 112 circular portion, 113, 114, 115, 116, 117, 118 pattern region, T ground contact end.

## Claims

1. A pneumatic tire, comprising:
a plurality of protrusions formed on a tire side face that is an outward face in a tire axial direction located further inward in a tire radial direction than a ground contact end of a tread and further outward in the tire radial direction than a rim line, wherein
each of the protrusions has a polygonal shape having at least one first face rising from the tire side face at an angle within ±15% with respect to a plane rising at 90° with respect to the tire side face, and at least one second face connected to the first face at a top portion of the first face and rising to be inclined with respect to the tire side face at an angle of greater than 90°+15%.

2. The pneumatic tire according to claim 1, wherein
each of the protrusions has a polygonal shape including two first faces, each of which is the first face, having an identical rectangular shape and connected with each other in a V shape, two second faces, each of which is the second face, connected to the two first faces, respectively, having an identical rectangular shape, and connected with each other in a V shape, and two third faces having an identical triangular shape, the two third faces respectively connected to opposite ends of the protrusion in a longitudinal direction along a V shape ridge line, and each of the two second faces has a rhombus shape when viewed in a direction orthogonal to the tire side face.

3. The pneumatic tire according to claim 1 or 2, comprising:
a first pattern region and a second pattern region, wherein a pitch that is an interval between apexes of the protrusions disposed in the first pattern region and a pitch that is an interval between apexes of the protrusions disposed in the second pattern region differ from each other.

4. The pneumatic tire according to any one of claims 1 to 3, wherein
the protrusions having an identical shape and disposed on the tire side face comprise two or more types of protrusions that are disposed in different orientations with respect to a tire circumferential direction or in a direction inclined with respect to the tire circumferential direction.

5. The pneumatic tire according to any one of claims 1 to 4, wherein
the protrusions protrude, on the tire side face, from a bottom face of a recess that is indented inward of the tire from a side wall base face.

6. The pneumatic tire according to any one of claims 1 to 5, wherein
adjacent protrusions among the protrusions have a ratio P/H of 2 or more and 14 or less, wherein the P/H is a ratio of a pitch P that is an interval between apexes of the adjacent protrusions with respect to a height H of the protrusions.

7. The pneumatic tire according to claim 6, wherein
the ratio P/H is 2 or more and 10 or less.

8. The pneumatic tire according to claim 7, wherein
the ratio P/H is 2 or more and 6 or less.

9. The pneumatic tire according to any one of claims 1 to 8, wherein
a ratio of a total circumferential length of portions where the protrusions are disposed with respect to an entire circumferential length of a side wall is 50% or more.

10. The pneumatic tire according to any one of claims 1 to 9, wherein
the protrusions are disposed within a range of 25% or more and 65% or less of the tire side face in the tire radial direction where a position of the rim line in the tire radial direction is 0 and a tire sectional height is 100.

11. A pneumatic tire mold for molding the pneumatic tire according to any one of claims 1 to 10, comprising:
a molding face including a plurality of recesses corresponding to the plurality of protrusions.
